# EUROPEAN PATENT APPLICATION

(11) **EP 3 360 412 A1**
(43) Date of publication of application: **15.08.2018**
(21) Application number: 16862300.7
(22) Date of filing: 10.10.2016
(51) Int. Cl.: A01M 1/02, A01M 1/10

(54) **WASP CATCHING DEVICE**

(30) Priority: 06.11.2015 KR 20150155558; 30.05.2016 KR 20160066612
(71) Applicant: Oh, Seung Jae, Gwangju 62053 (KR); Oh, Ju A, Gwangju 62401 (KR)
(72) Inventor: Oh, Seung Jae, Gwangju 62053 (KR); Oh, Ju A, Gwangju 62401 (KR)
(74) Representative: Müller Verweyen
(86) International application number: PCT/KR2016/011319
(87) International publication number: WO 2017/078282

(57) **Abstract**

Provided is a wasp catching device for catching wasps by using an attractant, the device comprising: an accommodation container in which the attractant is accommodated; an inlet member having a connection passage formed on the upper surface thereof at the upper part of the accommodation container, having a plurality of funnel-shaped inlets coupled by a rotation method so as to be detachably coupled and having each inlet passage formed to prevent the wasps from passing therethrough and to enable only honeybees to pass therethrough, and having a blocking net coupled to the bottom side thereof by the rotation method so as to primarily catch the wasps; a sunshade member coupled to the upper part of the inlet member by the rotation method; and a catching member coupled to the top of the inlet member at the upper part of the sunshade member by the rotation method, and having the upper end thereof to which a soft cap is coupled and the lower end thereof in which a luring passage, which lure the wasps or honeybees entering through the connection passage, is formed, such that the catching member is provided to secondarily catch the wasps and enable the honeybees to escape. Accordingly, due to an effect of smoothly catching only the wasps without difficulty or inconvenience, honeybee colonies are prevented from being destroyed, and thus the present invention also has an effect of increasing a honey yield.

## Description

### [Technical Field]

The present invention relates to a wasp catching device, and more particularly, to a wasp catching device in which wasps are easily lured and caught, the caught wasps are prevented from being discharged to an outside, other insects larger than the wasps are blocked from entering the wasp catching device, and honeybees introduced into the wasp catching device are allowed to escape smoothly.

### [Background Art]

In general, there are many kinds of wasps, and especially wasps including Vespa mandarinia wasps, Vespa ducalis wasps, Vespa velutina wasps, Vespa analis parallela wasps, and Vespa simillima xanthoptera wasps are harmful to honeybees for apiculture.

Recently, the Vespa velutina wasps are causing extensive damage to apiaries. In other words, about 5 to 10 Vespa velutina wasps can exterminate one honeybee colony within two hours, causing the extensive damage to apiaries.

Accordingly, various schemes for catching or killing the wasps are proposed. In general, a net is installed at an entrance of a beehive to prevent the wasps having a size larger than the honeybees from entering the beehive, or the wasps are killed by using flypaper or spraying an insecticide.

However, these schemes may exert bad influence on the honeybees as well as on the wasps, and may not be efficient.

In order to solve the above problems, referring to the related art of Korean Patent Application Publication No. 10-2002-0021958 (hereinafter referred to as "Related Art Document 1"), there has been proposed a wasp catcher in which a plurality of funnels are formed on both sides of a body and a cover to rescue and protect honeybees from wasps before the wasps approach a beehive, a plurality of odorous devices are formed on the cover to which a sticky adhesive is applied, and a fixing pin formed on a rainwater film is mounted in a fixing groove formed in the cover.

In addition, referring to Korean Patent Registration No. 10-1052214 (hereinafter referred to as "Related Art Document 2"), there has been disclosed an insecticidal device which selectively lures a plurality of wasps and includes a screen on which the wasps are able to stay simultaneously.

In addition, referring to Korean Patent Application Publication No. 10-2013-0140363 (hereinafter referred to as "Related Art Document 3"), there has been disclosed a wasp catching device capable of easily exterminating wasps that threaten honeybees by luring the wasps with an attractant and trapping the wasps in the catching device.

In addition, referring to Korean Utility Model Registration No. 20-0381866 (hereinafter referred to as "Related Art Document 4"), there has been disclosed a technology in which insects are caught by using an attractant and a luminous body, and a collection container for transporting the insects while keeping the insects alive is provided, so that the insects can be used as learning materials for nature researches and research institutes.

In addition, referring to Korean Utility Model Registration No. 20-0435146 (hereinafter referred to as "Related Art Document 5"), there has been disclosed a technology in which a wasp catching net is placed on a top of a cylindrical container filed with an attractant, and wasps lured by the attractant are caught inside the wasp catching net through an introduction net and killed, so that honeybees are protected from the wasps.

### [Disclosure]

### [Technical Problem]

However, in most cases of Related Art Documents 1 to 5, when the wasps are taken out alive from the catching device while being caught, the caught wasps may frequently escape through a gap formed at a portion being opened.

In addition, an entrance used by the wasps is wide enough to catch other insects such as moths in addition to the wasps, so that as the caught insects die, wasp catching efficiency is deteriorated.

In addition, a catcher using electricity is limited in use during rainy days, and inconvenient for a user in terms of safety.

Moreover, in most of the conventional catchers using the attractant, when a large moth is introduced, powder fallen from wings of the moth is mixed with the attractant so as to prevent the attractant from being volatilized, so that the luring is not smoothly performed, which considerably deteriorates the catching efficiency.

To solve the problems described above, a main object of the present invention is to provide a wasp catching device in which wasps are easily lured and caught, the caught wasps are prevented from being discharged to an outside, other insects larger than the wasps are blocked from entering the wasp catching device, and honeybees introduced into the wasp catching device are allowed to escape smoothly.

Another object of the present invention is to fundamentally prevent the wasps from returning through an introduction passage after the wasps are introduced.

Still another object of the present invention is to facilitate the simultaneous use of two kinds of attractants at a time as well as one kind of attractant.

Yet another object of the present invention is to facilitate convenient assembly and further improve manufacturing convenience.

Still yet another object of the present invention is to allow the caught wasps to be selectively and conveniently withdrawn.

### [Technical Solution]

As a technical solution of the present invention for achieving the objects described above, there is provided a wasp catching device for catching wasps by using an attractant, the wasp catching device including: an accommodation container in which the attractant is accommodated; an inlet member formed at an upper surface thereof with a connection passage, rotatably coupled to an upper portion of the accommodation container, provided with a plurality of funnel-shaped inlets detachably coupled thereto, in which each inlet is formed with an inlet passage configured to prevent the wasps from passing through the inlet passage and to allow honeybees to pass through the inlet passage after the wasps or the honeybees are introduced through the inlet passage, and provided at a bottom surface thereof with a blocking net rotatably coupled to the bottom surface of the inlet member to primarily catch the wasps; a sunshade member rotatably coupled to an upper portion of the inlet member; and a catching member rotatably coupled to an upper end of the inlet member which is disposed at an upper portion of the sunshade member, formed at an upper end thereof with a soft cap, and formed at an inner lower portion thereof with a luring passage for luring the wasps or the honeybees introduced through the connection passage to secondarily catch the wasps while allowing the honeybees to escape.

The accommodation container may be formed with a first accommodation space and a second accommodation space which are defined by a partition boss protruding upward from a center of a bottom surface of the accommodation container to accommodate mutually different attractants, respectively.

The inlet may be formed at a side surface thereof with a plurality of rectangular slit holes allowing the honeybees to pass therethrough while preventing the wasps from passing therethrough, such that ends of the inlet passages of the inlet positioned at an inner side of the inlet member are offset from each other at different positions.

The wasp catching device may further include a first blocking member formed of a flexible material and coupled to an end of the inlet to prevent the introduced wasps from being discharged to an outside through the inlet.

The first blocking member may include a fixing ring coupled to the end of the inlet, and a plurality of first blocking bars formed on a top surface of the fixing ring and inclined to have a width gradually narrowed from the inlet toward the inner side of the inlet member.

The catching member may be divided into an upper catching member and a lower catching member which are rotatably coupled to each other.

A plurality of perforation holes having a width allowing the honeybees to pass through the perforation holes while preventing the wasps from passing through the perforation holes may be formed at side surfaces of the upper and lower catching members, and the luring passage may be formed in an inverted funnel shape at the lower catching member and formed at a side surface thereof with a plurality of through-holes allowing the honeybees to pass therethrough while preventing the wasps from passing therethrough.

The wasp catching device may further include a second blocking member formed of a flexible material and coupled to an end of the luring passage to prevent the wasps from descending back to the inlet member through the luring passage when the wasps are lured into the luring passage and introduced into the catching member.

The second blocking member may include a coupling ring coupled to the end of the luring passage, a plurality of second blocking bars formed on a side surface of the coupling ring, and a plurality of third blocking bars formed on a top surface of the coupling ring and inclined to have a width gradually narrowed upward.

The cap may include a plurality of incision lines intersecting with each other.

### [Advantageous Effects]

According to the present invention, the wasps are easily lured and caught, the caught wasps are prevented from being discharged to the outside, other insects larger than the wasps are blocked from entering the wasp catching device, and the honeybees introduced into the wasp catching device are allowed to escape smoothly, so that the wasps can be smoothly caught without difficulty or inconvenience, and honeybee colonies are prevented from being destroyed, which lead to an increase in a honey yield.

In addition, the disposal of the caught wasps can be performed neatly and rapidly, and the honeybees introduced together with the wasps can be prevented from being killed.

In addition, the wasps are fundamentally prevented from returning through the introduction passage after the wasps are introduced, so that the wasp catching efficiency can be maximized.

In addition, two kinds of attractants as well as one kind of attractant can be simultaneously used at a time, so that efficiency of luring the wasps is maximized.

In addition, the assembly is convenient, and the manufacturing convenience is further improved, a production cost can be reduced, and it is convenient for anyone to easily assemble and use the device.

In addition, the caught wasps are selectively and conveniently withdrawn, so that the convenience of use can be further enhanced.

### [Description of Drawings]

FIG. 1 is an exploded perspective view for explaining the present invention.
FIG. 2 is a perspective view showing an assembled state of FIG. 1.
FIG. 3 is a vertical sectional view of FIG. 2.
FIG. 4 is a bottom view showing an inlet member of FIG. 2.
FIG. 5 is a sectional view for explaining the use of the present invention.
FIG. 6 is a side view for explaining a method of utilizing wasps caught according to the present invention.
FIG. 7 is a bottom view and a partial vertical sectional view for explaining another embodiment of the present invention.

### [Best Mode]

### [Mode for Invention]

Hereinafter, preferred embodiments of the present invention will be described in more detail with reference to the accompanying drawings, but the present invention is not limited to the embodiments.

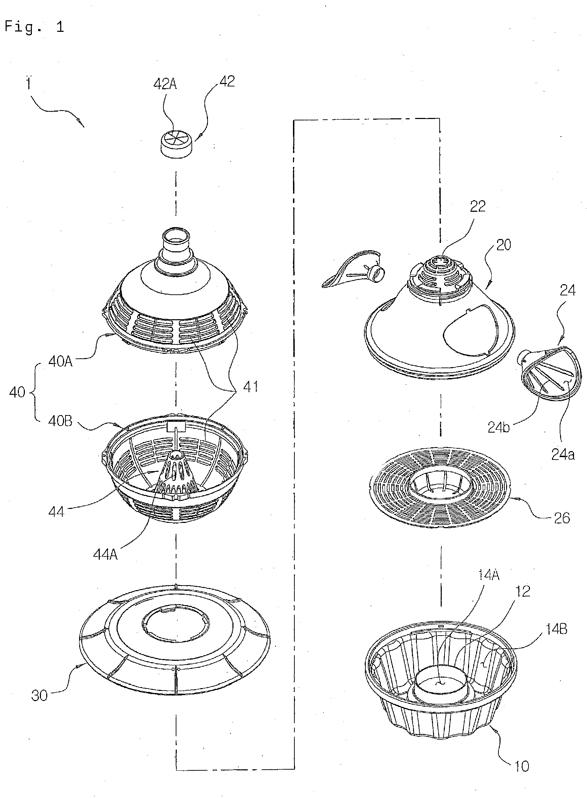

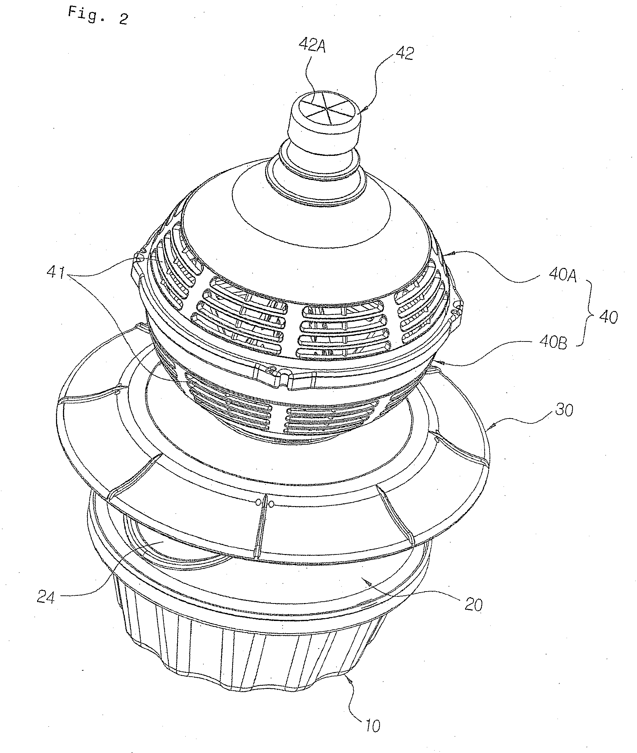

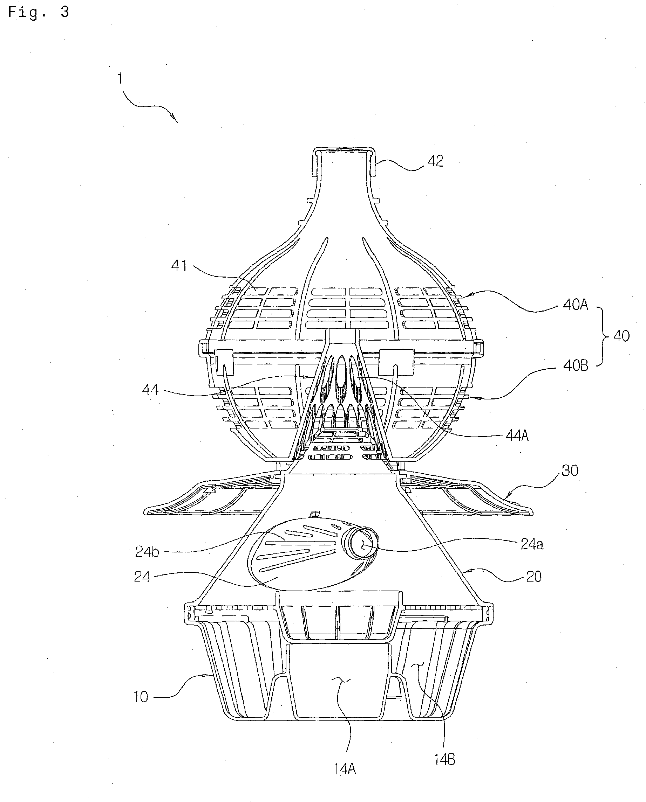

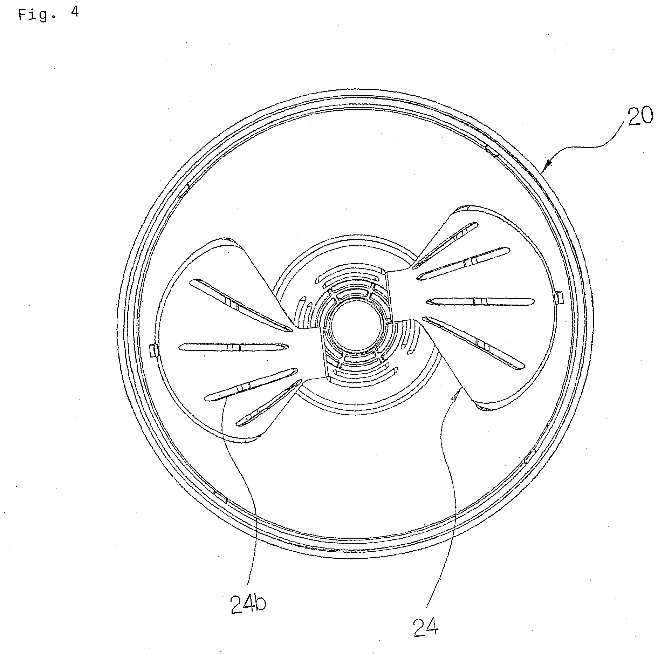

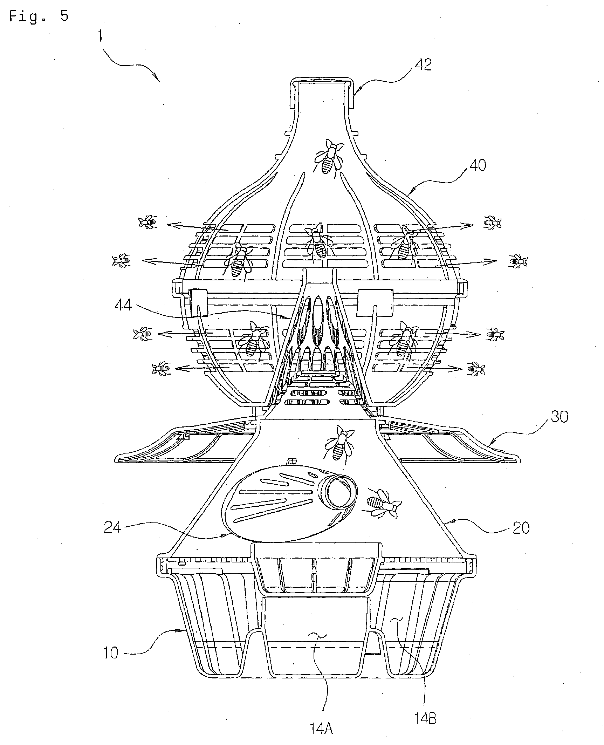

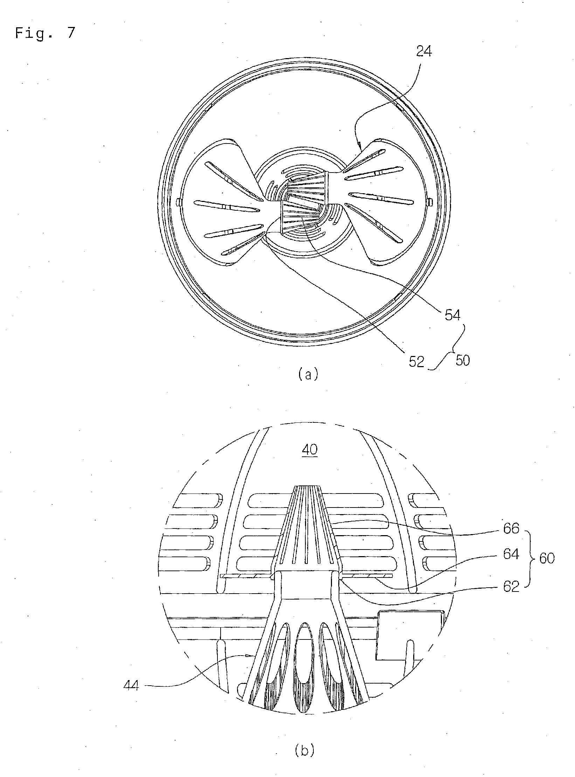

FIG. 1 is an exploded perspective view for explaining the present invention, FIG. 2 is a perspective view showing an assembled state of FIG. 1, FIG. 3 is a vertical sectional view of FIG. 2, FIG. 4 is a bottom view showing an inlet member shown in FIG. 2, and FIG. 5 is a sectional view for explaining the use of the present invention.

As shown in the drawings, there is proposed a catching device 1 for catching wasps using a widely-known attractant which is formed by mixing widely-known oak, sawdust, and logs with black sugar or includes oak essence, sugar, and a sour scent material to lure the wasps or honeybees.

In addition, as is well known, the wasps have a habit of chasing bright light or flying upward.

According to the present invention, the wasps are easily lured and caught, the caught wasps are prevented from being discharged to the outside, other insects larger than the wasps are blocked from entering the device, and the honeybees introduced into the device are allowed to escape smoothly.

According to the present invention, the wasp catching device 1 includes: an accommodation container 10 in which an attractant for luring wasps is accommodated; and an inlet member 20 formed at an upper surface thereof with a connection passage 22, rotatably coupled, that is, screw-coupled or coupled by typical protrusions and grooves to an upper portion of the accommodation container 10, provided with a plurality of funnel-shaped inlets 24 detachably coupled thereto, in which each inlet 24 is formed with an inlet passage 24a configured to prevent the wasps from passing through the inlet passage 24a and to allow honeybees to pass through the inlet passage 24a after the wasps or the honeybees are introduced through the inlet passage 24a, and provided at a bottom surface thereof with a blocking net 26 rotatably coupled, that is, screw-coupled or coupled by typical protrusions and grooves to the bottom surface of the inlet member 20 to primarily catch the wasps.

The attractant may be a liquid to be filled, and is preferably used together with fibers and nonwoven fabrics so as to be delicately spread for a long time.

Preferably, the detachable coupling of the inlet 24 is achieved by typical hooks and grooves.

In addition, the inlet 24 is formed at a side surface thereof with a plurality of rectangular slit holes 24b allowing the honeybees to pass therethrough while preventing the wasps from passing therethrough, such that ends of the inlet passages 24a of the inlet 24 positioned at an inner side of the inlet member 20 are offset from each other at different positions. Since the honeybees are sized about 5 mm, and the wasps are larger than the honeybees, the slit hole 24b is configured to have a width allowing the honeybees to pass through the slit hole 24b. The end of the inlet passage positioned at the inner side of the inlet member has a diameter allowing the wasps to pass through the end of the inlet passage.

In other words, the honeybees introduced through the inlet may immediately exit to the outside through the slit hole formed at the side surface of the inlet, so that the honeybees are prevented from being killed by the wasps introduced together with the honeybees.

In addition, since the ends of the inlet passages are offset from each other at different positions, the introduced wasps may not exit because the ends of the inlet passages that are offset from each other serve as a maze. In particular, since the inlet is formed in a funnel shape, as described in a widely-known fish tank, the wasps may exit the inlet once the wasps enter the inlet.

In addition, the inlet has a funnel shape, and the end of the inlet passage has a diameter allowing the wasps to pass through the end of the inlet passage, so that insects such as moths having a size exceeding a size of the wasp may not be introduced.

In addition, the blocking net coupled to the bottom surface of the inlet member prevents the wasps or the honeybees from falling into the accommodation container where the attractant is accommodated. In this case, the blocking net is has a general form in which transverse bars and longitudinal bars are crossed within a rim frame so as to form meshes having a small width sufficient for preventing the honeybees from falling into the accommodation container.

In addition, the accommodation container 10 is formed with a first accommodation space 14A and a second accommodation space 14B which are defined by a partition boss 12 protruding upward from a center of a bottom surface of the accommodation container 10 to accommodate mutually different attractants, respectively. In other words, it is intended to further increase the efficiency of luring the wasps by providing different kinds of attractants in comparison to providing one attractant. In addition, a typical gripping portion may be formed on the bottom surface where the partition boss is formed during a molding process to use the gripping portion as a handle that can be easily gripped upon separation or coupling of a catching member which will be described below.

Accordingly, the wasps are introduced into the inlet member through the inlet passage, which is formed by the funnel-shaped inlet of the inlet member, by a smell spreading from the attractant accommodated in the accommodation container. At this time, the honeybees introduced together with the wasps through the inlet passage may immediately exit to the outside through the slit hole of the inlet.

As described above, the inlet is formed in a funnel shape, and the ends of the inlet passages are offset from each other at different positions, so that the wasps introduced to the inlet member may be prevented from exiting to the outside through the inlet passage.

Meanwhile, the wasp catching device includes: a sunshade member 30 rotatably coupled, that is, screw-coupled or coupled by typical protrusions and grooves to an upper portion of the inlet member 20; and a catching member 40 rotatably coupled, that is, screw-coupled or coupled by typical protrusions and grooves to an upper end of the inlet member 20 which is disposed at an upper portion of the sunshade member 30, formed at an upper end thereof with a soft cap 42 formed of rubber, silicone or the like, and formed at an inner lower portion thereof with a luring passage 44 for luring the wasps or the honeybees introduced through the connection passage 22 to secondarily catch the wasps while allowing the honeybees to escape. In this case, the catching member formed in a net shape is formed of a material that allows light to be transmitted while allowing smooth ventilation.

The inlet member 20 is formed at the upper end thereof with a coupling flange divided into a plurality of parts in the form of a screw thread of at least two stages so that the sunshade member 30 and the catching member 40 may be rotatably coupled to each other. A plurality of coupling protrusions, which are sequentially and rotatably coupled to the coupling flange formed in multi-stages, are formed at the sunshade member and the catching member so as to be rotatably coupled to the coupling flange.

The sunshade member 30 has a diameter which is at least 1.5 times greater than the diameter of the inlet member 20, so that an entire inlet member is shaded against sunlight, and the wasps are smoothly introduced through the shaded inlet.

Accordingly, the wasps caught in the inlet member are introduced into the catching member through the connection passage and the luring passage, so that the secondary catching of the wasp is achieved.

In addition, the wasps may move smoothly through the connection passage and the luring passage because the inlet member is opaque so that light is not properly transmitted, an inside of the inlet member is relatively dark due to the sunshade member, and the catching member coupled to the upper portion of the inlet member is formed in a net shape so that the wasp having a habit of chasing the light or moving upward may be smoothly introduced into the catching member through the connection passage and the luring passage.

Accordingly, the wasps are finally caught in the catching member via the inlet member.

The catching member 40 is divided into an upper catching member 40A and a lower catching member 40B which are rotatably coupled, that is, screw-coupled or coupled by typical protrusions and grooves to each other.

In other words, it is preferable to manufacture the wasp catching device in divided parts so as to increase the manufacturing efficiency and simplify the distribution. In addition, it is possible to manufacture the wasp catching device in a polygonal shape, which is configured to catch as many wasps as possible, in addition to a spherical shape as shown in the drawings.

Particularly, a plurality of perforation holes 41 having a width allowing the honeybees to pass through the perforation holes 41 while preventing the wasps from passing through the perforation holes 41 are formed at side surfaces of the upper and lower catching members 40A and 40B, and the luring passage 44 is formed in an inverted funnel shape at the lower catching member 40B and formed at a side surface thereof with a plurality of through-holes 44A allowing the honeybees to pass therethrough while preventing the wasps from passing therethrough. In this case, for the reasons set forth above, widths of the perforation holes and the through-holes may be about 5 mm, which allows the honeybees to pass through the perforation holes or the through-holes.

In other words, the catching member is configured to allow the introduced honeybees to immediately escape without catching the honeybees, so that the honeybees are not caught in the catching member. In other words, the honeybees lured into the luring passage may smoothly escape through the through-holes formed in the luring passage and the perforation holes of the catching member without being caught.

Moreover, since the luring passage is formed in an inverted funnel shape, the wasps introduced through the luring passage may not descend back to the inlet member disposed below through the luring passage. Particularly, it is also taken into consideration that the wasp has a habit of not descending back to the inlet member, which is relatively dark, from the catching member, which is in a bright state due to a feature of generally transmitting light.

Meanwhile, the cap 42 may further include a plurality of incision lines 42A intersecting with each other, so that the wasps caught in the catching member may be smoothly withdrawn by a pincette or the like when necessary or required to be withdrawn to the outside.

Accordingly, the pincette is inserted through the incision lines to grab and withdraw the wasps as necessary, thereby further enhancing the convenience of use. In addition, since the cap is formed of a soft material such as rubber or silicone, when the pincette is removed after the insertion, the cap may remain closed based on the incision lines, so that the wasps may not escape through the cap.

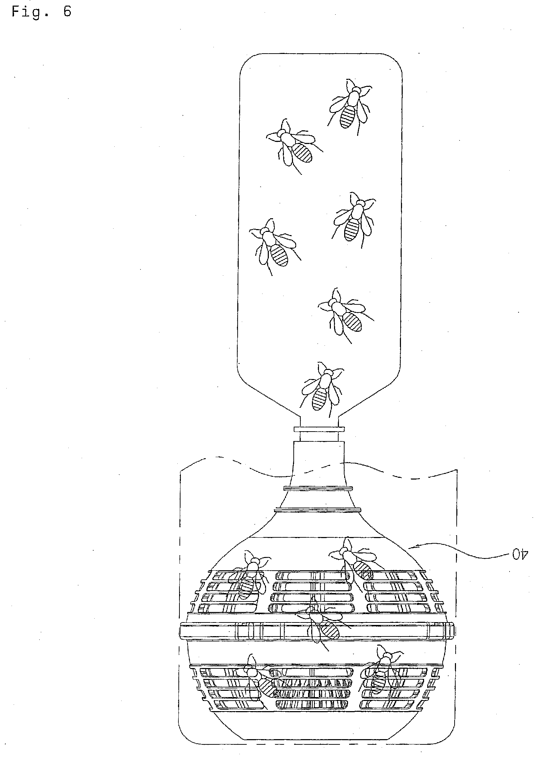

In addition, as shown in FIG. 6, the wasps caught by the catching member 40 are moved to a wasp liquor bottle by rotating and separating the catching member coupled to the inlet member, turning the catching member upside down so that the cap is located at the bottom, and separating the cap while simultaneously inserting the catching member in an inlet of the wasp liquor bottle. In this case, when an external portion of the catching member is covered with cloth or the like to make the catching member darker, the wasp may move to the wasp liquor bottle more rapidly because of a habit of chasing the light.

Accordingly, the disposal of the wasps caught by the catching member may be performed rapidly without difficulty or inconvenience.

Therefore, according to the present invention, anyone can easily assemble the wasp catching device because a configuration for assembly is generally simple, and the catching and disposal of the wasps are easily performed without difficulty or inconvenience because the wasps are lured by the attractant, so that the convenience of use is enhanced, and the honeybee colonies of the apiaries are prevented from being destroyed by the wasps while the honeybees are prevented from being killed, which lead to an overall increase in the honey yield.

Particularly, according to the present invention, the wasps are smoothly caught while the honeybees are allowed to immediately escape even after the honeybees are introduced, so that the honeybees are prevented from being killed.

FIG. 7 is a bottom view and a partial vertical sectional view for explaining another embodiment of the present invention.

In the above configuration as shown in the drawings, the wasps introduced into the inlet member through the inlet passage of the inlet are fundamentally prevented from escaping through the inlet passage, and the wasps caught by the catching member through the inlet passage are fundamentally prevented from returning to the inlet member through the luring passage.

The wasp catching device further includes a first blocking member 50 formed of a flexible material such as rubber or silicone and coupled to an end of the inlet 24 to prevent the introduced wasps from being discharged to the outside through the inlet 24, wherein the first blocking member 50 includes a fixing ring 52 coupled to the end of the inlet 24, and a plurality of first blocking bars 54 formed on a top surface of the fixing ring 52 and inclined to have a width gradually narrowed from the inlet 24 toward the inner side of the inlet member 20. In this case, although not shown in the drawings, a plurality of auxiliary blocking bars may be formed on a side surface of the fixing ring at a predetermined interval.

In other words, when the wasps are introduced into the inlet member through the inlet passage of the inlet, the first blocking bars may be smoothly spread open to allow the wasps to be introduced into the inlet member due to a flexible feature, and after the wasps are introduced, the spread first blocking bars are gathered back such that intervals between the first blocking bars are narrowed, so that the first blocking bars may prevent the wasps from entering the inlet.

Therefore, the escape of the wasps introduced into the inlet member is practically impossible.

Meanwhile, the wasp catching device further includes a second blocking member 60 formed of a flexible material such as rubber or silicone and coupled to an end of the luring passage 44 to prevent the wasps from descending back to the inlet member 20 through the luring passage 44 when the wasps are lured into the luring passage 44 and introduced into the catching member 40, wherein the second blocking member 60 includes a coupling ring 62 coupled to the end of the luring passage 44, a plurality of second blocking bars 64 formed on a side surface of the coupling ring 62, and a plurality of third blocking bars 66 formed on a top surface of the coupling ring 62 and inclined to have a width gradually narrowed upward.

In other words, the second blocking bar serves to prevent the wasps, which ascend from the side surface of the luring passage, from climbing on an upper portion of the luring passage by blocking the wasps.

When the wasps are introduced into the catching member through the luring passage, the third blocking bars are spread open to allow the wasps to be smoothly introduced, and gathered back and narrowed after the wasps are introduced, so that the wasps introduced into the catching member are fundamentally prevented from descending back to the inlet member disposed below through the luring passage.

Accordingly, the wasp catching efficiency can be maximized by the luring member as well as the catching member.

**[Description of Reference Numerals]**

| | |
|---|---|
| 1: Wasp catching device | 10: Accommodation container |
| 12: Partition boss | 14A: First accommodation space |
| 14B: Second accommodation space | 20: Inlet member |
| 22: Connection passage | 24: Inlet |
| 24a: Inlet passage | 24b: Slit hole |
| 26: Blocking net | 30: Sunshade member |
| 40: Catching member | 40A: Upper catching member |
| 40B: Lower catching member | 41: Perforation hole |
| 42: Cap | 42A: Incision line |
| 44: Luring passage | 44A: Through-hole |
| 50: First blocking member | 52: Fixing ring |
| 54: First blocking bar | 60: Second blocking member |
| 62: Coupling ring | 64: Second blocking bar |
| 66: Third blocking bar | |

## Claims

1. A wasp catching device for catching wasps by using an attractant, the wasp catching device comprising:
an accommodation container in which the attractant is accommodated;
an inlet member formed at an upper surface thereof with a connection passage, rotatably coupled to an upper portion of the accommodation container, provided with a plurality of funnel-shaped inlets detachably coupled thereto, in which each inlet is formed with an inlet passage configured to prevent the wasps from passing through the inlet passage and to allow honeybees to pass through the inlet passage after the wasps or the honeybees are introduced through the inlet passage, and provided at a bottom surface thereof with a blocking net rotatably coupled to the bottom surface of the inlet member to primarily catch the wasps;
a sunshade member rotatably coupled to an upper portion of the inlet member; and
a catching member rotatably coupled to an upper end of the inlet member which is disposed at an upper portion of the sunshade member, formed at an upper end thereof with a soft cap, and formed at an inner lower portion thereof with a luring passage for luring the wasps or the honeybees introduced through the connection passage to secondarily catch the wasps while allowing the honeybees to escape.

2. The wasp catching device of claim 1, wherein the accommodation container is formed with a first accommodation space and a second accommodation space which are defined by a partition boss protruding upward from a center of a bottom surface of the accommodation container to accommodate mutually different attractants, respectively.

3. The wasp catching device of claim 1, wherein the inlet is formed at a side surface thereof with a plurality of rectangular slit holes allowing the honeybees to pass therethrough while preventing the wasps from passing therethrough, such that ends of the inlet passages of the inlet positioned at an inner side of the inlet member are offset from each other at different positions.

4. The wasp catching device of claim 3, further comprising a first blocking member formed of a flexible material and coupled to an end of the inlet to prevent the introduced wasps from being discharged to an outside through the inlet.

5. The wasp catching device of claim 4, wherein the first blocking member includes a fixing ring coupled to the end of the inlet, and a plurality of first blocking bars formed on a top surface of the fixing ring and inclined to have a width gradually narrowed from the inlet toward the inner side of the inlet member.

6. The wasp catching device of claim 1, wherein the catching member is divided into an upper catching member and a lower catching member which are rotatably coupled to each other.

7. The wasp catching device of claim 6, wherein a plurality of perforation holes having a width allowing the honeybees to pass through the perforation holes while preventing the wasps from passing through the perforation holes are formed at side surfaces of the upper and lower catching members, and the luring passage is formed in an inverted funnel shape at the lower catching member and formed at a side surface thereof with a plurality of through-holes allowing the honeybees to pass therethrough while preventing the wasps from passing therethrough.

8. The wasp catching device of claim 1, further comprising a second blocking member formed of a flexible material and coupled to an end of the luring passage to prevent the wasps from descending back to the inlet member through the luring passage when the wasps are lured into the luring passage and introduced into the catching member.

9. The wasp catching device of claim 8, wherein the second blocking member includes a coupling ring coupled to the end of the luring passage, a plurality of second blocking bars formed on a side surface of the coupling ring, and a plurality of third blocking bars formed on a top surface of the coupling ring and inclined to have a width gradually narrowed upward.

10. The wasp catching device of one of claims 1 to 9, wherein the cap includes a plurality of incision lines intersecting with each other.
